# EUROPÄISCHE PATENTSCHRIFT

(11) **EP 3 215 388 B1**
(45) Veröffentlichungstag und Bekanntmachung des Hinweises auf die Patenterteilung: **13.06.2018**
(21) Anmeldenummer: 15793750.9
(22) Anmeldetag: 04.11.2015
(51) Int. Cl.: B60K 23/08

(54) **VERFAHREN ZUM BETREIBEN EINER MEHRACHSANTRIEBSEINRICHTUNG SOWIE ENTSPRECHENDE MEHRACHSANTRIEBSEINRICHTUNG**
METHOD FOR OPERATING A MULTI-AXLE DRIVE DEVICE AND CORRESPONDING MULTI-AXLE DRIVE DEVICE
PROCÉDÉ POUR FAIRE FONCTIONNER UN DISPOSITIF D'ENTRAÎNEMENT À PLUSIEURS AXES ET DISPOSITIF D'ENTRAÎNEMENT À PLUSIEURS AXES CORRESPONDANT

(30) Priorität: 06.11.2014 DE 102014016374
(43) Veröffentlichungstag der Anmeldung: 13.09.2017
(73) Patentinhaber: AUDI AG, 85045 Ingolstadt (DE)
(72) Erfinder: WEIDEMANN, Dieter, 85134 Stammham (DE); HANICKEL, Heiko, 85110 Kipfenberg (DE); KOLB, Florian, 85049 Ingolstadt (DE); BRÜHL, Hans Jörg, 85092 Kösching (DE)
(74) Vertreter: Lehle, Josef
(86) Internationale Anmeldenummer: PCT/EP2015/075759
(87) Internationale Veröffentlichungsnummer: WO 2016/071424

(56) Entgegenhaltungen:
- WO-A1-2010/085519
- WO-A2-2014/166819

## Beschreibung

Die Erfindung betrifft ein Verfahren zum Betreiben einer Mehrachsantriebseinrichtung, wobei die Mehrachsantriebseinrichtung eine in einer Wirkverbindung zwischen einer ersten Abtriebswelle und einer Verbindungswelle vorliegende Synchronisierungskupplung und zumindest eine in einer Wirkverbindung zwischen der Verbindungswelle und einer zweiten Abtriebswelle vorliegende Trennkupplung aufweist, und wobei die Synchronisierungskupplung sowie die Trennkupplung in einem ersten Betriebszustand geöffnet und in einem zweiten Betriebszustand geschlossen sind. Die Erfindung betrifft weiterhin eine Mehrachsantriebseinrichtung.

Die Mehrachsantriebseinrichtung kann beispielsweise für ein Kraftfahrzeug verwendet werden und insbesondere Bestandteil des Kraftfahrzeugs sein. Die Mehrachsantriebseinrichtung ermöglicht das Antreiben mehrerer Achsen, beispielsweise einer ersten Achse, insbesondere einer Vorderachse, und einer zweiten Achse, insbesondere einer Hinterachse, des Kraftfahrzeugs. Eine Wirkverbindung zwischen den Achsen des Kraftfahrzeugs wird dabei über die Verbindungswelle, welche beispielsweise als Kardanwelle vorliegt, hergestellt. Häufig ist es wünschenswert, dass mittels der Mehrachsantriebseinrichtung lediglich zeitweise ein Mehrachsbetrieb durchgeführt wird, während welchem tatsächlich mehrere der Achsen angetrieben werden. Im Falle des Kraftfahrzeugs ist dies beispielsweise nur dann notwendig, wenn die Traktion bei einem Antreiben nur einer der Achsen zu gering wäre und/oder falls eine zu starke Querbeschleunigung auftritt. Häufig ist es daher sinnvoll, mittels der Mehrachsantriebseinrichtung lediglich eine der Achsen anzutreiben WO 2010/085519 A offenbart ein Verfahren und eine Mehrachsantriebseinrichtung gemäß dem Oberbegriff der unabhängigen Ansprüche. Es ist nun Aufgabe der Erfindung, ein Verfahren zum Betreiben einer Mehrachsantriebseinrichtung vorzuschlagen, welches gegenüber dem Stand der Technik Vorteile aufweist, insbesondere ein schnelleres Umschalten auf einen Mehrachsbetrieb ermöglicht.

Dies wird erfindungsgemäß mit dem Verfahren mit den Merkmalen des Anspruchs 1 erreicht. Dabei ist vorgesehen, dass bei einem Überschreiten einer ersten Schaltschwelle durch eine Schaltgröße während des ersten Betriebszustands die Synchronisierungskupplung wenigstens teilweise geschlossen und erst bei einem Überschreiten einer zweiten Schaltschwelle die Trennkupplung geschlossen wird.

Die Mehrachsantriebseinrichtung ermöglicht wahlweise das Antreiben lediglich einer Achse oder mehrerer Achsen, insbesondere aller Achsen. Entsprechend weist die Mehrachsantriebseinrichtung wenigstens eine Kupplung auf, um die zweite Achse von der ersten Achse beziehungsweise die zweite Abtriebswelle von der ersten Abtriebswelle zu entkoppeln. Um die bewegte Masse der Mehrachsantriebseinrichtung so gering wie möglich zu halten und entsprechend die daraus resultierenden Verluste zu vermeiden, soll die Verbindungswelle nicht angetrieben werden, wenn nicht alle der Achsen angetrieben werden, insbesondere lediglich eine der Achsen angetrieben wird. Entsprechend sind mehrere Kupplungen vorgesehen.

Im Rahmen der hier vorgestellten Mehrachsantriebseinrichtung sind zumindest die Synchronisierungskupplung sowie die Trennkupplung vorhanden. Die Synchronisierungskupplung liegt in der Wirkverbindung zwischen der ersten Abtriebswelle und der Verbindungswelle vor. Die erste Abtriebswelle entspricht dabei vorzugsweise einer der Achsen. Im Falle des Kraftfahrzeugs steht die erste Abtriebswelle unmittelbar, also nicht über die Synchronisierungskupplung und/oder die Trennkupplung, in Wirkverbindung mit einem Antriebsaggregat des Kraftfahrzeugs. In der Wirkverbindung kann dabei ein Getriebe, vorzugsweise ein Schaltgetriebe, ein Differentialgetriebe, insbesondere ein Achsdifferentialgetriebe und/oder eine Anfahrkupplung vorgesehen sein. Die Verbindungswelle ist dagegen lediglich mittelbar mit dem Antriebsaggregat wirkverbindbar, nämlich über die Synchronisierungskupplung.

Die Synchronisierungskupplung kann grundsätzlich beliebig ausgestaltet sein, vorzugsweise ermöglicht sie jedoch das stufenlose oder diskrete Einstellen eines bestimmten Synchronisierungsdrehmoments zwischen der ersten Abtriebswelle und der Verbindungswelle. Die Trennkupplung ist besonders bevorzugt als Formschlusskupplung, insbesondere als Klauenkupplung, ausgeführt und kann insoweit wahlweise entweder vollständig geöffnet oder vollständig geschlossen sein. Sie kennt entsprechend keine Zwischenstellungen, in welchen lediglich ein Teil des Drehmoments zwischen der Verbindungswelle und der zweiten Abtriebswelle übertragen wird.

Über die Verbindungswelle ist die zweite Abtriebswelle mit der ersten Abtriebswelle koppelbar beziehungsweise wirkverbindbar. Die zweite Abtriebswelle entspricht vorzugsweise der zweiten Achse des Kraftfahrzeugs oder zumindest einem Teil davon. Beispielsweise ist die zweite Abtriebswelle einem Rad des Kraftfahrzeugs zugeordnet. Die zweite Abtriebswelle ist - analog zu der Verbindungswelle - lediglich mittelbar mit dem Antriebsaggregat des Kraftfahrzeugs wirkverbindbar, nämlich über die Synchronisierungskupplung und die Trennkupplung.

Im Falle des Kraftfahrzeugs sind beispielsweise der zweiten Achse mehrere, insbesondere zwei, zweite Abtriebswellen zugeordnet. Dabei kann es vorgesehen sein, dass die Verbindungswelle auf ihrer der Synchronisierungskupplung abgewandten Seite an ein Differentialgetriebe, insbesondere ein Achsdifferentialgetriebe, angeschlossen ist und insoweit als Eingangswelle für dieses vorliegt. An die beiden Ausgangswellen des Differentialgetriebes ist nun jeweils eine zweite Abtriebswelle über eine Trennkupplung angeschlossen, wobei an jeder zweiten Abtriebswelle ein Rad des Kraftfahrzeugs auf der dem Differentialgetriebe abgewandten Seite der Trennkupplung vorgesehen ist. Alternativ kann selbstverständlich auch vorgesehen sein, dass die beiden zweiten Abtriebswellen unmittelbar an das Differentialgetriebe angeschlossen sind, welches wiederum über die Trennkupplung mit der Verbindungswelle in Verbindung steht beziehungsweise wirkverbindbar ist.

Die Mehrachsantriebseinrichtung kann zumindest in dem ersten Betriebszustand und in dem zweiten Betriebszustand vorliegen. In dem ersten Betriebszustand sind sowohl die Synchronisierungskupplung als auch die Trennkupplung vollständig geöffnet, sodass kein Drehmoment übertragen wird. Entsprechend ist die Verbindungswelle sowohl von der ersten Abtriebswelle als auch von der zweiten Abtriebswelle vollständig entkoppelt, sodass sie nicht angetrieben ist und sich vorzugsweise im Stillstand befindet. Dies gilt vorzugsweise bei der vorstehend beschriebenen Ausgestaltung, welche das Differentialgetriebe aufweist, ebenfalls für dieses. Die Verbindungswelle und/oder das Differentialgetriebe müssen insoweit nicht mitgeschleppt werden, sodass in dem ersten Betriebszustand die dafür ansonsten aufzuwendende Energie eingespart wird. In dem zweiten Betriebszustand sind dagegen sowohl die Synchronisierungskupplung als auch die Trennkupplung wenigstens teilweise, insbesondere vollständig, geschlossen, sodass sich ein an der ersten Abtriebswelle anliegendes Antriebsmoment, beispielsweise gleichmäßig, auf die erste Abtriebswelle und die zweite Abtriebswelle verteilt.

Bei einem Überschreiten der ersten Schaltschwelle durch die Schaltgröße während des ersten Betriebszustands soll nun die Synchronisierungskupplung wenigstens teilweise geschlossen und erst bei einem Überschreiten der zweiten Schaltschwelle die Trennkupplung geschlossen werden. Die zweite Schaltschwelle ist größer als die erste Schaltschwelle. Es ist also vorgesehen, ein Umschalten von dem ersten Betriebszustand auf den zweiten Betriebszustand nicht erst vorzunehmen, wenn die Schaltgröße eine einzige Schaltschwelle, welche üblicherweise der zweiten Schaltschwelle entspricht, überschreitet. Vielmehr sollen bereits vorher Vorbereitungsmaßnahmen getroffen werden, sodass das tatsächliche Zuschalten der zweiten Abtriebswelle deutlich rascher erfolgen kann, als dies bisher möglich war.

Hierzu wird ein mehrstufiges Verfahren, beispielsweise ein zweistufiges Verfahren, vorgeschlagen, bei welchem zunächst die Synchronisierungskupplung wenigstens teilweise geschlossen wird, um zum einen die Synchronisierungskupplung auf ein vollständiges Schließen vorzubereiten. Die Synchronisierungskupplung liegt in dem ersten Betriebszustand, also wenn sie vollständig geöffnet ist, vorzugsweise in einer Lüftungsposition vor, in welcher ein großes Lüftspiel der Synchronisierungskupplung realisiert ist. Dies dient in dem ersten Betriebszustand einer weiteren Verringerung der Verluste. Unter dem teilweisen Schließen der Synchronisierungskupplung ist zunächst und vorzugsweise lediglich zu verstehen, dass die Synchronisierungskupplung aus einer Offenstellung heraus in Richtung ihrer Geschlossenstellung verlagert wird, wobei dies durch eine Verringerung des Lüftspiels erfolgt, welches dabei jedoch nicht beseitigt wird.

Die Vorbereitung der Synchronisierungskupplung erfolgt dabei also derart, dass sie zwar teilweise geschlossen wird, um das Lüftspiel zu verringern, dabei jedoch eine Stellung der Synchronisierungskupplung gewählt und an ihr eingestellt wird, in welcher weiterhin kein Drehmoment zwischen der ersten Abtriebswelle und der Verbindungswelle übertragen wird. Alternativ kann die Synchronisierungskupplung jedoch auch derart eingestellt werden, dass bereits ein Teil des anliegenden Drehmoments von der ersten Abtriebswelle an die zweite Verbindungswelle übertragen wird.

Diese Maßnahmen werden zumindest zum Teil bereits bei Erreichen oder Überschreiten der ersten Schaltschwelle durch die Schaltgröße vorgenommen. Die Trennkupplung dagegen wird erst geschlossen, insbesondere vollständig geschlossen, wenn die Schaltgröße auch die zweite Schaltschwelle erreicht oder überschreitet, wobei die zweite Schaltschwelle größer ist als die erste Schaltschwelle. Übersteigt die Schaltgröße die erste Schaltschwelle, unterschreitet diese jedoch wieder, bevor sie die zweite Schaltschwelle erreicht hatte, so wird zwar zunächst die Synchronisierungskupplung wenigstens teilweise geschlossen, die Trennkupplung bleibt jedoch geöffnet. Bei dem Unterschreiten der ersten Schaltschwelle durch die Schaltgröße wird auch die Synchronisierungskupplung wieder vollständig geöffnet beziehungsweise in ihre Lüftungsposition gebracht, sodass erneut der erste Betriebszustand vorliegt und nicht in den zweiten Betriebszustand gewechselt wird.

Mithilfe des beschriebenen Verfahrens kann das tatsächliche Wechseln in einen Mehrachsbetrieb beziehungsweise das Wechseln aus dem ersten Betriebszustand in den zweiten Betriebszustand deutlich beschleunigt werden, weil bei dem Überschreiten der zweiten Schaltschwelle durch die Schaltgröße bereits die notwendigen Vorbereitungen getroffen wurden, also beispielsweise die Synchronisierungskupplung aus ihrer Lüftungsposition heraus verlagert wurde und/oder die Verbindungswelle und/oder das Differentialgetriebe bereits hinsichtlich ihrer Drehzahl beschleunigt wurden.

Eine Alternative der Erfindung sieht vor, dass das teilweise Schließen der Synchronisierungskupplung derart durchgeführt wird, dass das Lüftspiel der Synchronisierungskupplung verringert, jedoch nicht beseitigt wird. Auf eine derartige Vorgehensweise wurde vorstehend bereits eingegangen. In dem ersten Betriebszustand liegt die Synchronisierungskupplung in ihrer Lüftungsposition vor, welche sich durch ein besonders großes Lüftspiel auszeichnet. Bei dem Schließen der Synchronisierungskupplung wird nun das Lüftspiel zwar verkleinert, jedoch nicht vollständig beseitigt, sodass weiterhin kein Drehmoment zwischen der ersten Abtriebswelle und der Verbindungswelle übertragen wird. Überschreitet insoweit nachfolgend die Schaltgröße auch die zweite Schaltschwelle, so ist das Lüftspiel bereits verringert. Entsprechend kann die Synchronisierungskupplung weitaus schneller in ihre Geschlossenstellung verbracht werden, in welcher sie vorzugsweise vollständig geschlossen ist. Die andere Alternative der Erfindung sieht vor, dass das teilweise Schließen der Synchronisierungskupplung derart durchgeführt wird, dass ein bestimmtes Drehmoment zwischen der ersten Abtriebswelle und der Verbindungswelle übertragen wird. Hinsichtlich des Schließens der Synchronisierungskupplung wird also das Lüftspiel der Synchronisierungskupplung nicht nur verringert, sondern vollständig beseitigt. Die Synchronisierungskupplung wird dabei zum Übertragen des bestimmten Drehmoments zwischen der ersten Abtriebswelle und der Verbindungswelle eingestellt, beispielsweise durch entsprechende Wahl eines Anpressdrucks von Kupplungselementen, insbesondere Kupplungsscheiben. Die Trennkupplung ist jedoch weiterhin vollständig geöffnet, sodass über die Synchronisierungskupplung lediglich die Verbindungswelle und/oder das Differentialgetriebe, nicht jedoch die zweite Abtriebswelle, von der ersten Abtriebswelle mit dem bestimmten Drehmoment angetrieben werden. Die Erfindung sieht dabei vor, dass das bestimmte Drehmoment derart gewählt wird, dass sich die Drehzahl der Verbindungswelle nicht verändert. Die Verbindungswelle und/oder das mit der Verbindungswelle permanent wirkverbundene Differentialgetriebe weisen eine bestimmte Massenträgheit auf, welche sich in Form von Trägheitsmomenten niederschlägt. Diese Trägheitsmomente stehen einer Beschleunigung der Verbindungswelle und/oder des Differentialgetriebes entgegen. Ebenso werden die Verbindungswelle und/oder das Differentialgetriebe von Reibmomenten beaufschlagt, welche ebenfalls der Beschleunigung entgegenwirken. Die Reibmomente werden beispielsweise durch eine Lagerung der Verbindungswelle und/oder des Differentialgetriebes verursacht.

Selbst bei Anliegen eines Drehmoments an der Verbindungswelle kann aus diesem Grund der Fall auftreten, dass sich ihre Drehzahl nicht verändert, insbesondere nicht vergrößert. Das bestimmte Drehmoment soll nun derart gewählt werden, dass genau dies der Fall ist. Es wird insoweit über die Synchronisierungskupplung ein von Null verschiedenes Drehmoment übertragen, welches jedoch nicht ausreicht, um die Verbindungswelle zu beschleunigen. Insoweit ist ein Kupplungsschleifen der Synchronisierungskupplung vorgesehen. Nach dem teilweise Schließen der Synchronisierungskupplung wird diese derart eingestellt, dass die Verbindungswelle auf eine Vorgabedrehzahl gebracht wird, falls die Schaltgröße immer noch größer oder gleich der ersten Schaltschwelle ist. Die Vorgabedrehzahl kann grundsätzlich beliebig gewählt werden. Beispielsweise entspricht sie der Drehzahl der zweiten Abtriebswelle oder zumindest einem Teil von dieser. Beispielsweise beträgt die Vorgabedrehzahl mindestens 10 %, mindestens 20 %, mindestens 30 %, mindestens 40 %, mindestens 50 %, mindestens 60 %, mindestens 70 %, mindestens 80 %, mindestens 90 % oder mindestens 95 % der Drehzahl der zweiten Abtriebswelle oder entspricht dieser.

Eine weitere vorteilhafte Ausgestaltung der Erfindung sieht vor, dass bei einem Unterschreiten der ersten Schaltschwelle durch die Schaltgröße die Synchronisierungskupplung wieder geöffnet wird. Auf diesen Fall wurde vorstehend bereits hingewiesen. Unterschreitet die Schaltgröße die erste Schaltschwelle, ohne zuvor die zweite Schaltschwelle erreicht oder überschritten zu haben, so wird die Synchronisierungskupplung wieder geöffnet, insbesondere vollständig geöffnet, ohne dass nach dem unmittelbar vorhergehenden Überschreiten der ersten Schaltschwelle durch die Schaltgröße die Trennkupplung geschlossen worden wäre. Insoweit wurden die beschriebenen Vorbereitungsmaßnahmen durchgeführt, ohne dass tatsächlich vollständig auf den zweiten Betriebszustand umgeschaltet worden wäre.

Für die Vorbereitung des Umschaltens ist zwar ein bestimmter Energieaufwand notwendig, dieser macht sich jedoch insbesondere hinsichtlich des Fahrkomforts und/oder der Akustikeigenschaften des Kraftfahrzeugs bezahlt, wenn tatsächlich die Trennkupplung geschlossen und mithin in den zweiten Betriebszustand gewechselt wird. Selbstverständlich kann zusätzlich oder alternativ wenigstens eine weitere Bedingung vorgesehen sein, bei deren Erfüllung die Synchronisierungskupplung geöffnet wird.

Eine besonders bevorzugte Ausgestaltung der Erfindung sieht vor, dass die Trennkupplung erst dann geschlossen wird, wenn die Verbindungswelle die Vorgabedrehzahl erreicht hat. Insoweit ist es also nicht hinreichend, dass die Schaltgröße die zweite Schaltschwelle erreicht oder überschritten hat. Vielmehr muss zusätzlich die Drehzahl der Verbindungswelle der Vorgabedrehzahl entsprechen, um ein ruckfreies Einkuppeln zu ermöglichen.

In einer Weiterbildung der Erfindung ist vorgesehen, dass die Vorgabedrehzahl der Drehzahl der zweiten Abtriebswelle entspricht. Hierauf wurde vorstehend bereits hingewiesen. Ebenso kann die Vorgabedrehzahl ein Bruchteil der Drehzahl der zweiten Abtriebswelle sein. Es ist auch möglich, zunächst die Vorgabedrehzahl kleiner als die Drehzahl der zweiten Abtriebswelle zu wählen, wenn die Schaltgröße die erste Schaltschwelle erreicht oder überschreitet. Je länger dieser Zustand andauert und/oder je schneller die Schaltgröße in Richtung der zweiten Schaltschwelle ansteigt, kann die Vorgabedrehzahl von der zunächst gewählten Vorgabedrehzahl in Richtung der Drehzahl der zweiten Abtriebswelle vergrößert werden. Dies erfolgt insbesondere prädiktiv, sodass die Vorgabedrehzahl der Drehzahl der zweiten Abtriebswelle entspricht, sobald die Schaltgröße die zweite Schaltschwelle erreicht oder überschreitet.

Schließlich kann vorgesehen sein, dass als Schaltgröße eine Zustandsgröße eines Kraftfahrzeugs verwendet wird, insbesondere der Schlupf wenigstens eines Rads des Kraftfahrzeugs. Mithilfe der Mehrachsantriebseinrichtung kann in dem zweiten Betriebszustand das Antriebsmoment auf die erste Abtriebswelle und die zweite Abtriebswelle verteilt werden, während es in dem ersten Betriebszustand lediglich an der ersten Abtriebswelle anliegt. Entsprechend wird durch den in dem zweiten Betriebszustand durchgeführten Mehrachsantrieb der Schlupf der angetriebenen Räder des Kraftfahrzeugs im Vergleich zu dem ersten Betriebszustand verringert. Um zu starken Schlupf zu verhindern, soll mithin der Schlupf des wenigstens einen Rades, insbesondere aller momentan angetriebenen Räder des Kraftfahrzeugs, als Schaltgröße verwendet werden.

Die Erfindung betrifft weiterhin eine Mehrachsantriebseinrichtung, insbesondere zur Durchführung des vorstehend beschriebenen Verfahrens, wobei die Mehrachsantriebseinrichtung eine in einer Wirkverbindung zwischen einer ersten Abtriebswelle und einer Verbindungswelle vorliegende Synchronisierungskupplung und zumindest eine in einer Wirkverbindung zwischen der Verbindungswelle und einer zweiten Abtriebswelle vorliegende Trennkupplung aufweist, und wobei die Synchronisierungskupplung sowie die Trennkupplung in einem ersten Betriebszustand geöffnet und in einem zweiten Betriebszustand geschlossen sind. Dabei ist vorgesehen, dass die Mehrachsantriebseinrichtung dazu ausgebildet ist, bei einem Überschreiten einer ersten Schaltschwelle durch eine Schaltgröße während des ersten Betriebszustands die Synchronisierungskupplung wenigstens teilweise zu schließen und erst bei einem Überschreiten einer zweiten Schaltschwelle die Trennkupplung zu schließen.

Auf die Vorteile einer derartigen Ausgestaltung der Mehrachsantriebseinrichtung beziehungsweise der entsprechenden Vorgehensweise wurde bereits hingewiesen. Sowohl die Mehrachsantriebseinrichtung als auch das Verfahren können gemäß den vorstehenden Ausführungen weitergebildet sein, sodass insoweit auf diese verwiesen wird.

Selbstverständlich ist die Erfindung auch auf ein Kraftfahrzeug mit einer derartigen Mehrachsantriebseinrichtung gerichtet, wobei auch hier die Mehrachsantriebseinrichtung gemäß den vorstehenden Ausführungen weitergebildet sein kann.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Antriebsstrangs eines Kraftfahrzeugs, welcher eine Mehrachsantriebseinrichtung aufweist, und
- Figur 2: mehrere Diagramme, in welchen eine Stellung einer Synchronisierungskupplung, eine Vorgabedrehzahl für eine Verbindungswelle, eine Istdrehzahl der Verbindungswelle sowie eine Stellung einer Trennkupplung jeweils über der Zeit dargestellt sind.

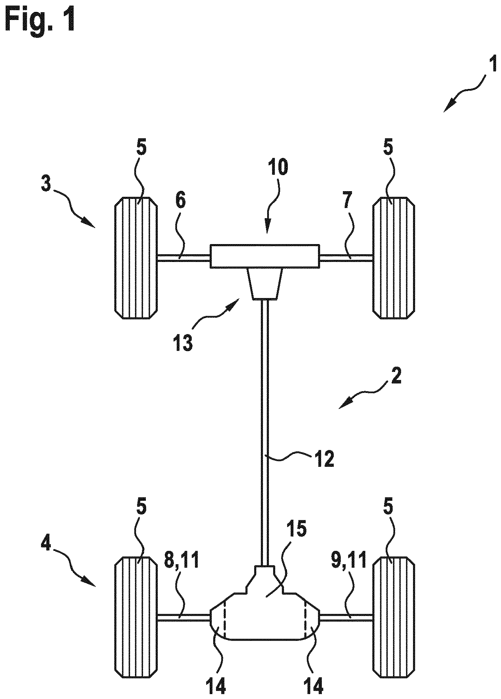

Die Figur 1 zeigt einen Antriebsstrang 1 für ein nicht weiter dargestelltes Kraftfahrzeug. Der Antriebsstrang 1 verfügt über eine Mehrachsantriebseinrichtung 2, welche zum wahlweisen Betreiben nur einer ersten Achse 3 oder der ersten Achse 3 sowie einer zweiten Achse 4 dient. Jede der Achsen 3 und 4 verfügt in dem hier dargestellten Ausführungsbeispiel über zwei Räder 5, die an Teilachsen 6 und 7 der ersten Achse 3 und Teilachsen 8 und 9 der zweiten Achse 4 angeordnet sind. Es kann nun vorgesehen sein, dass die Teilachsen 6 und 7 der ersten Achse 3 eine erste Abtriebswelle 10 bilden. Besonders bevorzugt sind sie jedoch über ein Differentialgetriebe, insbesondere ein Achsdifferentialgetriebe, an die erste Abtriebswelle 10 angeschlossen, also insbesondere starr und/oder permanent mit ihr wirkverbunden. Die Teilachsen 8 und 9 können jeweils als eine zweite Abtriebswelle 11 vorliegen. Alternativ kann es vorgesehen sein, dass die Teilachsen 8 und 9 über ein Differentialgetriebe, insbesondere ein Achsdifferentialgetriebe, an die zweite Abtriebswelle 11 angeschlossen sind.

Die Mehrachsantriebseinrichtung 2 verfügt über eine Verbindungswelle 12, über welche eine Wirkverbindung zwischen der ersten Achse 3 und der zweiten Achse 4 hergestellt werden kann. Die Verbindungswelle 12 ist vorzugsweise als Kardanwelle ausgeführt. In einer Wirkverbindung zwischen der ersten Abtriebswelle 10 und der Verbindungswelle 12 ist eine Synchronisierungskupplung 13 angeordnet. Die Synchronisierungskupplung 13 ist vorzugsweise als kraftschlüssige Kupplung ausgestaltet. Sie ermöglicht insbesondere das Übertragen eines beliebigen Anteils des anliegenden Drehmoments. In einer Wirkverbindung zwischen der Verbindungswelle 12 und der zweiten Abtriebswelle 11 ist zudem eine Trennkupplung 14 angeordnet. In dem hier dargestellten Ausführungsbeispiel liegen insoweit zwei Trennkupplungen 14 vor, wobei jeweils eine der Trennkupplungen 14 zwischen einem Differentialgetriebe 15 und einer der beiden zweiten Abtriebswellen 11 beziehungsweise den Teilachsen 8 und 9 angeordnet ist.

Die Verbindungswelle 12 ist dabei starr und/oder permanent mit dem Differentialgetriebe 15 wirkverbunden. Die Wirkverbindung zwischen dem Differentialgetriebe 15 und mithin der Verbindungswelle 12 einerseits sowie den zweiten Abtriebswellen 11 in Form der Teilachsen 8 und 9 andererseits kann mithilfe der Trennkupplung 14 wahlweise hergestellt oder unterbrochen sein. Vorzugsweise befinden sich die Trennkupplungen 14 stets in der gleichen Stellung, sodass entweder eine Wirkverbindung zwischen der Verbindungswelle 12 einerseits und den Teilachsen 8 und 9 andererseits hergestellt oder unterbrochen ist.

In einem ersten Betriebszustand der Mehrachsantriebseinrichtung 2 sind die Synchronisierungskupplung 13 und die Trennkupplung 14 geöffnet, sodass die Wirkverbindung zwischen der ersten Abtriebswelle 10 und der zweiten Abtriebswelle 11 unterbrochen ist. Insoweit nachfolgend lediglich von einer Trennkupplung 14 oder einer zweiten Abtriebswelle 11 die Rede ist, so sind im Rahmen des vorliegenden Ausführungsbeispiels stets beide Abtriebswellen 11 beziehungsweise beide Trennkupplungen 14 gemeint. In einem zweiten Betriebszustand sind die Synchronisierungskupplung 13 und die Trennkupplung 14 vollständig geschlossen. Die Trennkupplung 14 ist bevorzugt als Formschlusskupplung, insbesondere als Klauenkupplung, ausgeführt.

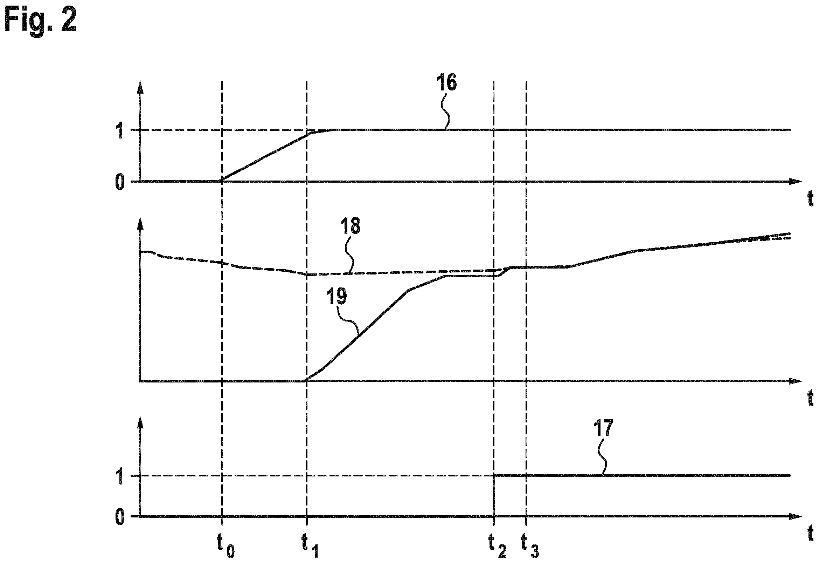

Ein Verfahren zum Betreiben der Mehrachsantriebseinrichtung 2 gemäß den vorstehenden Ausführungen wird anhand der Figur 2 beschrieben. In dem oberen Diagramm zeigt ein Verlauf 16 die momentane Stellung der Synchronisierungskupplung 13 zwischen einer vollständig geöffneten Stellung ("0" beziehungsweise 0 %) und einer Synchronisierstellung ("1" beziehungsweise 100 %), die vorzugsweise einer vollständig geschlossenen Stellung entspricht. Ein Verlauf 17 deutet die momentane Stellung der Trennkupplung 14 an, ebenfalls zwischen einer vollständig geöffneten Stellung ("0") und einer vollständig geschlossenen Stellung ("1"). Ein Verlauf 18 beschreibt eine Vorgabedrehzahl für die Verbindungswelle 12, ein Verlauf 19 schließlich die tatsächliche Istdrehzahl der Verbindungswelle 12.

Zu einem Zeitpunkt t = t₀ erreicht oder überschreitet eine Schaltgröße eine erste Schaltschwelle. Als Schaltgröße wird beispielsweise eine Zustandsgröße des Kraftfahrzeugs, insbesondere der Schlupf wenigstens eines Rads des Kraftfahrzeugs, herangezogen. Sobald die erste Schaltschwelle durch die Schaltgröße erreicht oder überschritten wird, soll die Mehrachsantriebseinrichtung 2 auf einen Wechsel des Betriebszustands von dem ersten Betriebszustand hin zu dem zweiten Betriebszustand vorbereitet werden. Zu diesem Zweck wird die Synchronisierungskupplung 13 wenigstens teilweise geschlossen, wie dies für den Zeitraum t₀ < t ≤ t₁ dem Verlauf 16 zu entnehmen ist.

Dabei wird ein bestimmtes Drehmoment für die Synchronisierungskupplung 13 derart gewählt, dass sich die Drehzahl der Verbindungswelle 12 nicht verändert. Die Synchronisierungskupplung 13 wird derart eingestellt, dass das bestimmte Drehmoment zwischen der ersten Abtriebswelle 10 und der Verbindungswelle 12 übertragen wird. Dieser Zustand der Synchronisierungskupplung 13 ist in dem Zeitpunkt t = t₁ erreicht. Anschließend wird, falls die Schaltgröße immer noch größer oder gleich der ersten Schaltschwelle ist, das bestimmte Drehmoment derart gewählt, dass die Verbindungswelle 12 auf die Vorgabedrehzahl gemäß Verlauf 18 beschleunigt wird. Zu diesem Zweck wird während des Zeitraums t₁ < t ≤ t₂ die Synchronisierungskupplung 13 vollständig geschlossen, sodass sich die Drehzahl der Verbindungswelle 12 gemäß dem Verlauf 19 vergrößert und sich im Wesentlichen der Vorgabedrehzahl gemäß Verlauf 18 anpasst.

Überschreitet nun die Schaltgröße eine zweite Schaltschwelle, welche vorzugsweise größer ist als die erste Schaltschwelle, und entspricht die Drehzahl der Verbindungswelle 12 der Vorgabedrehzahl, welche wiederum gleich der Drehzahl der zweiten Abtriebswelle 11 ist, so wird auch die Trennkupplung 14 geschlossen, was zum Zeitpunkt t = t₂ gemäß Verlauf 17 erfolgt. Nachfolgend ist folglich die Drehzahl der Verbindungswelle 12 stets gleich der Vorgabedrehzahl, welche in dem hier dargestellten Ausführungsbeispiel stets der Drehzahl der zweiten Abtriebswelle 11 entspricht.

Mit der vorstehend beschriebenen Vorgehensweise erfolgt das Umschalten aus dem ersten Betriebszustand in den zweiten Betriebszustand nicht in einem einzigen Schritt, sondern vielmehr mehrstufig. Zunächst wird das Umschalten vorbereitet, indem die Synchronisierungskupplung 13 wenigstens teilweise geschlossen wird, sodass entweder das Lüftspiel der Synchronisierungskupplung verringert, jedoch nicht beseitigt wird, oder ein bestimmtes Drehmoment zwischen der ersten Abtriebswelle 10 und der Verbindungswelle 12 übertragen wird, während die Trennkupplung 14 weiterhin geöffnet ist. Erst bei einem Überschreiten der zweiten Schaltschwelle durch die Schaltgröße wird schlussendlich auch die Trennkupplung 14 geschlossen, sodass das tatsächliche Zuschalten der zweiten Achse 4 mithilfe der Mehrachsantriebseinrichtung 2 innerhalb eines äußerst kurzen Zeitraums erfolgen kann.

## Patentansprüche

1. Verfahren zum Betreiben einer Mehrachsantriebseinrichtung (2), wobei die Mehrachsantriebseinrichtung (2) eine in einer Wirkverbindung zwischen einer ersten Abtriebswelle (10) und einer Verbindungswelle (12) vorliegende Synchronisierungskupplung (13) und zumindest eine in einer Wirkverbindung zwischen der Verbindungswelle (12) und einer zweiten Abtriebswelle (11) vorliegende Trennkupplung (14) aufweist, und wobei die Synchronisierungskupplung (13) sowie die Trennkupplung (14) in einem ersten Betriebszustand geöffnet und in einem zweiten Betriebszustand geschlossen sind, **dadurch gekennzeichnet, dass** bei einem Überschreiten einer ersten Schaltschwelle durch eine Schaltgröße während des ersten Betriebszustands die Synchronisierungskupplung (13) teilweise geschlossen und erst bei einem Überschreiten einer größeren zweiten Schaltschwelle die Trennkupplung (14) geschlossen wird, wobei das teilweise Schließen der Synchronisierungskupplung (13) derart durchgeführt wird, dass das Lüftspiel der Synchronisierungskupplung (13) verringert, jedoch nicht beseitigt wird oder dass ein bestimmtes Drehmoment zwischen der ersten Abtriebswelle (10) und der Verbindungswelle (12) übertragen wird, wobei das bestimmte Drehmoment derart gewählt wird, dass sich die Drehzahl der Verbindungswelle (12) nicht verändert.

2. Verfahren nach Anspruch 1, **dadurch gekennzeichnet, dass** nach dem teilweisen Schließen der Synchronisierungskupplung (13) diese derart eingestellt wird, dass die Verbindungswelle (12) auf eine Vorgabedrehzahl gebracht wird, falls die Schaltgröße immer noch größer oder gleich der ersten Schaltschwelle ist.

3. Verfahren nach einem der vorhergehenden Ansprüche, **dadurch gekennzeichnet, dass** bei einem Unterschreiten der ersten Schaltschwelle durch die Schaltgröße die Synchronisierungskupplung (13) wieder geöffnet wird.

4. Verfahren nach einem der vorhergehenden Ansprüche, **dadurch gekennzeichnet, dass** die Trennkupplung (14) erst dann geschlossen wird, wenn die Verbindungswelle (12) die Vorgabedrehzahl erreicht hat.

5. Verfahren nach einem der vorhergehenden Ansprüche, **dadurch gekennzeichnet, dass** die Vorgabedrehzahl der Drehzahl der zweiten Abtriebswelle (11) entspricht.

6. Verfahren nach einem der vorhergehenden Ansprüche, **dadurch gekennzeichnet, dass** als Schaltgröße eine Zustandsgröße eines Kraftfahrzeugs verwendet wird, insbesondere der Schlupf wenigstens eines Rads (5) des Kraftfahrzeugs.

7. Mehrachsantriebseinrichtung (2) zur Durchführung des Verfahrens nach einem der vorhergehenden Ansprüche, wobei die Mehrachsantriebseinrichtung (2) eine in einer Wirkverbindung zwischen einer ersten Abtriebswelle (10) und einer Verbindungswelle (12) vorliegende Synchronisierungskupplung (13) und zumindest eine in einer Wirkverbindung zwischen der Verbindungswelle (12) und einer zweiten Abtriebswelle (11) vorliegende Trennkupplung (14) aufweist, und wobei die Synchronisierungskupplung (13) sowie die Trennkupplung (14) in einem ersten Betriebszustand geöffnet und in einem zweiten Betriebszustand geschlossen sind, **dadurch gekennzeichnet, dass** die Mehrachsantriebseinrichtung (2) dazu ausgebildet ist, bei einem Überschreiten einer ersten Schaltschwelle durch eine Schaltgröße während des ersten Betriebszustands die Synchronisierungskupplung (13) teilweise zu schließen und erst bei einem Überschreiten einer größeren zweiten Schaltschwelle die Trennkupplung (14) zu schließen, wobei das teilweise Schließen der Synchronisierungskupplung (13) derart durchgeführt wird, dass das Lüftspiel der Synchronisierungskupplung (13) verringert, jedoch nicht beseitigt wird oder dass ein bestimmtes Drehmoment zwischen der ersten Abtriebswelle (10) und der Verbindungswelle (12) übertragen wird, wobei das bestimmte Drehmoment derart gewählt wird, dass sich die Drehzahl der Verbindungswelle (12) nicht verändert.

## Claims

1. Method for operating a multi-axle drive device (2), the multi-axle drive device (2) having a synchronising clutch (13) which is operatively connected between a first output shaft (10) and a connecting shaft (12) and at least one disconnect clutch (14) which is operatively connected between the connecting shaft (12) and a second output shaft (11) and wherein the synchronising clutch (13) and the disconnect clutch (14) are open in a first operating state and are closed in a second operating state, **characterised in that** when a first actuating threshold is exceeded by an actuating variable during the first operating state, the synchronising clutch (13) is at least partially closed and the disconnect clutch (14) is closed only when a larger second actuating threshold has been exceeded, wherein the partial closing of the synchronising clutch (13) is performed in such a way, that the air space of the synchronising clutch (13) is reduced, but not eliminated, or that a certain torque is transmitted between the first output shaft (10) and the connecting shaft (12), wherein the certain torque is chosen such that the speed of the connecting shaft (12) does not change.

2. Method according to claim 1, **characterised in that** after the partial closing of the synchronising clutch (13) this is set in such a way that the connecting shaft (12) is brought to a predefined speed, if the actuating variable is still larger or the same as the first actuating threshold.

3. Method according to any one of the preceding claims, **characterised in that,** when the actuating variable falls below the first actuating threshold, the synchronising clutch (13) is opened again.

4. Method according to any one of the preceding claims, **characterised in that** the disconnect clutch (14) is not closed, until the connecting shaft (12) has reached the predefined speed.

5. Method according to any one of the preceding claims, **characterised in that** the predefined speed corresponds to the speed of the second output shaft (11).

6. Method according to any one of the preceding claims, **characterised in that** a state variable of a motor vehicle, in particular the slip of at least one wheel (5) of the motor vehicle, is used as actuating variable.

7. Multi-axle drive device (2) for performing the method according to any one of the preceding claims, the multi-axle drive device (2) having a synchronising clutch (13) which is operatively connected between a first output shaft (10) and a connecting shaft (12) and at least one disconnect clutch (14) which is operatively connected between the connecting shaft (12) and a second output shaft (11), and wherein the synchronising clutch (13) and the disconnect clutch (14) are open in a first operating state and are closed in a second operating state, **characterised in that** the multi-axle drive device (2) is configured, when a first actuating threshold is exceeded by an actuating variable during the first operating state, to close the synchronising clutch (13) partially and only to close the disconnect clutch (14) when a larger second actuating threshold has been exceeded, wherein the partial closing of the synchronising clutch (13) is performed in such a way, that the air space of the synchronising clutch (13) is reduced, but not eliminated, or that a certain torque is transmitted between the first output shaft (10) and the connecting shaft (12), wherein the certain torque is chosen such that the speed of the connecting shaft (12) does not change.

## Revendications

1. Procédé de fonctionnement d'un dispositif d'entraînement d'essieux multiples (2),
dans lequel le dispositif d'entraînement d'essieux multiples (2) comporte un embrayage synchroniseur (13) se trouvant dans une liaison active entre un premier arbre de sortie (10) et un arbre de liaison (12) et au moins un embrayage séparateur (14) se trouvant dans une liaison active entre l'arbre de liaison (12) et un deuxième arbre de sortie (11)
et dans lequel l'embrayage synchroniseur (13) ainsi que l'embrayage séparateur (14) sont ouverts dans un premier état de fonctionnement et sont fermés dans un deuxième état de fonctionnement,
**caractérisé en ce que,** lorsqu'une première grandeur de commutation dépasse un premier seuil de commutation pendant le premier état de fonctionnement, l'embrayage synchroniseur (13) est partiellement fermé et, seulement lors du dépassement d'un deuxième seuil de commutation plus grand, l'embrayage séparateur (14) est fermé,
la fermeture partielle de l'embrayage synchroniseur (13) étant réalisée par le fait que le jeu de l'embrayage synchroniseur (13) est réduit mais n'est pas éliminé ou qu'un certain couple est transmis entre le premier arbre de sortie (10) et l'arbre de liaison (12), ledit couple étant choisi de telle sorte que la vitesse de rotation de l'arbre de liaison (12) ne change pas.

2. Procédé selon la revendication 1, **caractérisé en ce que,** après la fermeture partielle de l'embrayage synchroniseur (13), celui-ci est réglé de telle sorte que l'arbre de liaison (12) est amené à une vitesse de rotation de consigne si la grandeur de commutation est toujours supérieure ou égale au premier seuil de commutation.

3. Procédé selon l'une quelconque des revendications précédentes, **caractérisé en ce que,** lorsque la grandeur de commutation devient inférieure au premier seuil de commutation, l'embrayage synchroniseur (13) est à nouveau ouvert.

4. Procédé selon l'une quelconque des revendications précédentes, **caractérisé en ce que** l'embrayage séparateur (14) n'est fermé que lorsque l'arbre de liaison (12) a atteint la vitesse de rotation de consigne.

5. Procédé selon l'une quelconque des revendications précédentes, **caractérisé en ce que** la vitesse de rotation de consigne correspond à la vitesse de rotation du deuxième arbre de sortie (11).

6. Procédé selon l'une quelconque des revendications précédentes, **caractérisé en ce que,** comme grandeur de commutation, on utilise une grandeur d'état d'un véhicule automobile, en particulier le patinage d'au moins une roue (5) du véhicule automobile.

7. Dispositif d'entraînement d'essieux multiples (2) destiné à la mise en oeuvre du procédé selon l'une quelconque des revendications précédentes,
dans lequel le dispositif d'entraînement d'essieux multiples (2) comporte un embrayage synchroniseur (13) se trouvant dans une liaison active entre un premier arbre de sortie (10) et un arbre de liaison (12) et au moins un embrayage séparateur (14) se trouvant dans une liaison active entre l'arbre de liaison (12) et un deuxième arbre de sortie (11)
et dans lequel l'embrayage synchroniseur (13) ainsi que l'embrayage séparateur (14) sont ouverts dans un premier état de fonctionnement et sont fermés dans un deuxième état de fonctionnement,
**caractérisé en ce que** le dispositif d'entraînement d'essieux multiples (2) est conçu pour, lorsqu'une première grandeur de commutation dépasse un premier seuil de commutation pendant le premier état de fonctionnement, fermer partiellement l'embrayage synchroniseur (13) et, seulement lors du dépassement d'un deuxième seuil de commutation plus grand, fermer l'embrayage séparateur (14),
la fermeture partielle de l'embrayage synchroniseur (13) étant réalisée par le fait que le jeu de l'embrayage synchroniseur (13) est réduit mais n'est pas éliminé ou qu'un certain couple est transmis entre le premier arbre de sortie (10) et l'arbre de liaison (12), ledit couple étant choisi de telle sorte que la vitesse de rotation de l'arbre de liaison (12) ne change pas.
